# EUROPEAN PATENT APPLICATION

(11) **EP 3 508 783 A1**
(43) Date of publication of application: **10.07.2019**
(21) Application number: 19150343.2
(22) Date of filing: 04.01.2019
(51) Int. Cl.: F21V 8/00, G02B 27/22

(54) **DISPLAY ASSEMBLY WITH UNBALANCED BACKLIGHT TO MANAGE WINDOWING EFFECT**

(30) Priority: 05.01.2018 US 201815862972
(71) Applicant: Visteon Global Technologies, Inc., Van Buren Township, MI 48111-5711 (US)
(72) Inventor: FLEURY, Michel M., 92100 Boulogne, Billancourt (FR)
(74) Representative: MERH-IP Matias Erny Reichl Hoffmann Patentanwälte PartG mbB

(57) **Abstract**

A display assembly and method of backlighting are provided. The assembly includes a first display panel extending along a plane to a first display periphery and a second display panel extending in parallel along the plane to a second display periphery. A light guide panel extends along and below the first display panel and second display panel. A backlight module extends along the light guide panel and includes a plurality of light emitting diodes divided into a first ranking group including a plurality of first light emitting diodes of a first luminance are arranged to provide light through the first display panel and the second display panel within the first display periphery. A second ranking group includes a plurality of second light emitting diodes of a second luminance are arranged to provide light through the second display panel beyond the first display periphery to eliminate a windowing effect.

## Description

### BACKGROUND

Display assemblies are increasingly utilizing multiple display panels to provide for various visual effects in vehicles and other uses. Such display panels may even be stacked on top of one another to provide for a three dimensional viewing effect, as part of a vehicle instrument cluster, for example. However, when display panels are arranged with one over another, the uniformity of the black luminance between the display panels can be adversely affected. Specifically, the lack of uniformity of the luminance between the display panels can create a "windowing" effect in which it is clear to a viewer of the display assembly that there are multiple panels being utilized. In addition, the use of multiple display panels can also create a parallax effect, especially as the display assembly is viewed from different angles.

Known solutions to the undesirable parallax and windowing effects include locally dimming light sources used for backlighting by reducing the amount of electricity supplied to them, for example. Nevertheless, such solutions commonly result in decreased luminance performance of the display assembly and/or significantly increase the cost of the resulting display assembly.

### SUMMARY

This section provides a general summary of the disclosure and is not a comprehensive disclosure of its full scope or all of its features, aspects or objectives.

According to an aspect of the disclosure, a display assembly is provided. The display assembly includes a first display panel extending along a plane to a first display periphery to display a first display content. A second display panel extends in parallel along the plane to a second display periphery to display a second display content. A light guide panel extends in parallel along the plane and below the first display panel and second display panel to diffuse light provided therethrough. A backlight module extends along the light guide panel and includes at least one light source to provide light through the light guide panel and the first display panel and the second display panel. The at least one light source includes a plurality of light emitting diodes divided into a first ranking group including a plurality of first light emitting diodes that each have a first luminance. The plurality of first light emitting diodes are arranged relative to the light guide panel to provide light through the first display panel and the second display panel within the first display periphery. A second ranking group includes a plurality of second light emitting diodes that each have a second luminance different than the first luminance and arranged relative to the light guide panel to provide light through the second display panel beyond the first display periphery to eliminate a windowing effect due to differing light transmission through the second display panel as compared to light transmission through both the first display panel and the second display panel.

According to another aspect of the disclosure, a method of backlighting a display assembly is also provided. The method begins with the step of arranging a plurality of first light emitting diodes of a first ranking group each having a first luminance within a first display periphery of a first display panel extending along a second display panel. The method continues with the step of arranging a plurality of second light emitting diodes of a second ranking group each having a second luminance different than the first luminance outside the first display periphery and inside a second display periphery of the second display panel. The next step of the method is providing light through the first display panel and the second display panel within the first display periphery using the plurality of first light emitting diodes of the first ranking group. The method also includes the step of providing light through the second display panel beyond the first display periphery using the plurality of second light emitting diodes of the second ranking group. The method concludes with the step of eliminating a windowing effect due to differing light transmission through the second display panel as compared to light transmission through both the first display panel and the second display panel.

According to yet another aspect of the disclosure another display assembly is provided. The display assembly includes a first display panel extending along a plane to a first display periphery to display a first display content. A second display panel extends in parallel along the plane to a second display periphery to display a second display content. A backlight module extends in parallel along the plane and includes at least one light source to provide light through the first display panel and the second display panel. A light guide panel extends in parallel along the plane and below the first display panel and second display panel and above the backlight module to diffuse light provided therethrough. The light guide has an internal texture density distribution arranged to transmit light from the backlight module through the first display panel and the second display panel within the first display periphery with a first transmitted luminance. The internal texture density distribution is also arranged to transmit light from the backlight module through the second display panel beyond the first display periphery with a second transmitted luminance different than the first transmitted luminance to eliminate a windowing effect due to differing light transmission through the second display panel as compared to light transmission through both the first display panel and the second display panel.

Further areas of applicability will become apparent from the description provided herein. The description and specific examples in this summary are intended for purposes of illustration only and are not intended to limit the scope of the present disclosure.

### BRIEF DESCRIPTION OF THE DRAWINGS

The drawings described herein are for illustrative purposes only of selected embodiments and not all implementations, and are not intended to limit the present disclosure to only that actually shown. With this in mind, various features and advantages of example embodiments of the present disclosure will become apparent from the written description when considered in combination with the appended Figures, wherein:
FIG. 1 illustrates an exploded view of a display assembly including a first display panel and a second display panel with a light guide and a plurality of light emitting diodes according to aspects of the disclosure;
FIG. 2 illustrates the display assembly of FIG. 1 showing an arrangement of the plurality of light emitting diodes to eliminate a windowing effect due to differing light transmission through the second display panel as compared to light transmission through both the first display panel and the second display panel according to aspects of the disclosure;
FIGS. 3-5 illustrate a luminance distribution of a light guide having an internal texture density distribution according to aspects of the disclosure; and
FIGS. 6 and 7 illustrate steps of a method of backlighting a display assembly according to aspects of the disclosure.

### DETAILED DESCRIPTION

Display panels that stacked on top of one another to provide for a three dimensional viewing effect, for example, can undesirably lead to adverse effects on the uniformity of the black luminance between the display panels. In fact, it can become apparent to a viewer that there are multiple panels being utilized due to the lack of uniformity of the luminance between the display panels, which can create a "windowing" and/or parallax effect.

Locally dimming the light sources used for the backlighting of the display panels by reducing the amount of electricity supplied to them can result in more complex control methodologies. However, such a solution can result in decreased luminance performance of the display assembly and/or significantly increase the cost of the resulting display assembly. Thus, there is a need for improved display assemblies.

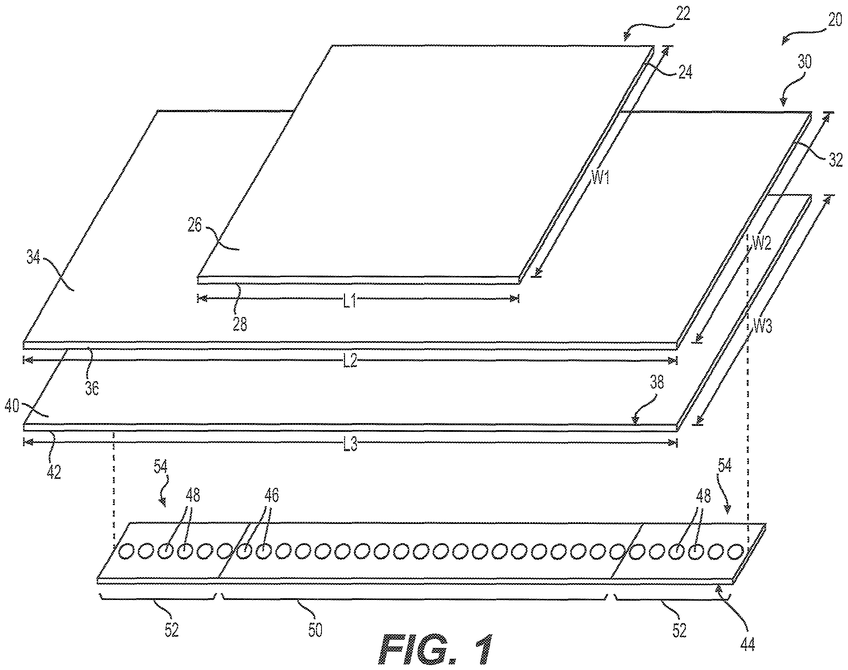

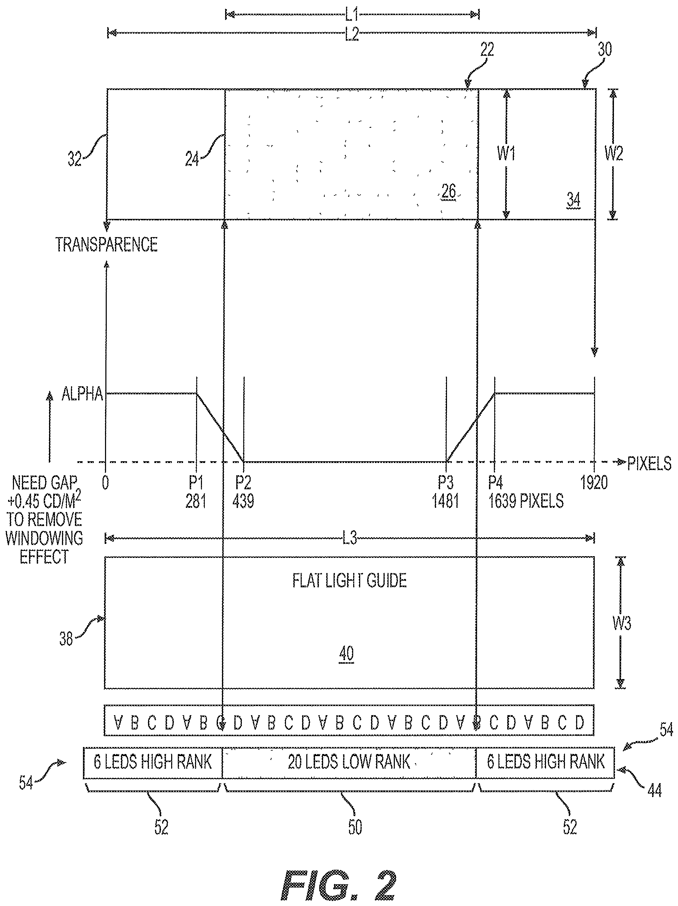

Referring to the Figures, wherein like numerals indicate corresponding parts throughout the several views, a display assembly 20 is provided in FIGS. 1 and 2. The display assembly 20 includes a first display panel 22 extending along a plane to a first display periphery 24 to display a first display content (e.g., foreground content of a three dimensional image or video). The first display panel 22 has a first display top surface 26 and a first display bottom surface 28 opposite the first display top surface 26. The first display panel 22 has a first display length L1 and a first display width W1.

A second display panel 30 extends in parallel along the plane to a second display periphery 32 to display a second display content (e.g., background content of a three dimensional image or video). The second display panel 30 has a second display top surface 34 facing the first display bottom surface 28 and a second display bottom surface 36 opposite the second display top surface 34. The second display panel 30 has a second display length L2 (e.g., 1920 pixels) greater than the first display length L1 and a second display width W2 equal to the first display width W1 and the first display panel 22 is centered along the second display length L2 to define an overlap display area (i.e., the area in which the first display panel 22 overlaps the second display panel 30).

A light guide panel 38 extends in parallel along the plane and below the first display panel 22 and second display panel 30 to diffuse light provided therethrough. The light guide panel 38 is flat and has a light guide top surface 40 facing the second display bottom surface 36 and a light guide bottom surface 42 opposite the light guide top surface 40. The light guide panel 38 has a light guide length L3 equal to the second display length L2 and a light guide width W3 equal to the second display width. While the display panels 22, 30 and light guide panel 38 are illustratively described with the specific relationship between dimensions, as set forth above, it should be understood that the display assembly 20 may include display panels 22, 30 and light guide panels 38 of various dimensions.

A backlight module 44 extends along the light guide panel 38 and is adjacent to the light guide bottom surface 42 of the light guide panel 38. More specifically, the backlight module 44 includes at least one light source to provide light through the light guide panel 38 and the first display panel 22 and the second display panel 30. The at least one light source includes a plurality of light emitting diodes 46, 48. The backlight module 44 includes a backlight mounting panel for supporting and spacing the plurality of light emitting diodes 46, 48. The plurality of light emitting diodes 46, 48 are arranged rectilinearly adjacent to one another along the second display length L2 and each provides light for a length of the display panels 22, 30 extending approximately sixty pixels. It should, however, be appreciated that other arrangements of the plurality of light emitting diodes 46, 48 are possible.

The plurality of light emitting diodes 46, 48 are divided into a first ranking group 50 including a plurality of first light emitting diodes 46 that each have a first luminance and a second ranking group 52 including a plurality of second light emitting diodes 48 that each have a second luminance different than the first luminance. In more detail, the luminance of the plurality of first light emitting diodes 46 of the first ranking group 50 is less than the luminance of the plurality of second light emitting diodes 48 of the second ranking group 52.

The plurality of first light emitting diodes 46 are arranged relative to the light guide panel 38 to provide light through the first display panel 22 and the second display panel 30 within the first display periphery 24 (e.g., approximately between the positions marked P1 and P4 and within the first display width W1). The plurality of first light emitting diodes 46 of the first ranking group 50 are disposed along the first display length L1 inside the overlap display area (i.e., high luminance area). The plurality of first light emitting diodes 46 of the first ranking group 50 includes twenty light emitting diodes 46, 48. However, other quantities of first light emitting diodes 46 may be utilized.

The plurality of second light emitting diodes 48 of the second ranking group 52 are arranged relative to the light guide panel 38 to provide light through the second display panel 30 beyond the first display periphery 24 (e.g., approximately outside the positions marked P1 and P4 and outside the first display width W1). The plurality of second light emitting diodes 48 of the second ranking group 52 include a pair of outer subgroups 54 of the plurality of second light emitting diodes 48 disposed along the second display length L2 on either side of the plurality of first light emitting diodes 46 of the first ranking group 50 and each outer subgroup 54 is disposed outside the overlap display area (i.e., low luminance area). The plurality of second light emitting diodes 48 of the second ranking group 52 includes six second light emitting diodes 48 in each of the outer subgroups 54. However, other quantities of second light emitting diodes 48 may be utilized.

As a result of the arrangement of first light emitting diodes 46 and second light emitting diodes 48, any windowing effect due to differing light transmission through the second display panel 30 as compared to light transmission through both the first display panel 22 and the second display panel 30 can advantageously be reduced or eliminated. Similarly, the natural luminance transition inside the light guide panel 38 between the high luminance area and the low luminance area can reduce any parallax effect.

As can be seen in a graph showing transparence versus the pixels of the display panels 22, 30 in FIG. 2, it is advantageous to provide a luminance gap of +0.45 cd/m², between the areas of low luminance and high luminance of the display assembly 20 disclosed herein, to remove the windowing effect. As can be seen in the graph, in a section of the second display panel 30 outside of the overlap display area spanning 281 pixels to a first position P1, there is an increased transparence. The transparence drops in the overlap display area from a second position P2 at 439 pixels from the edge of the second display panel 30 and extending to a third position P3, at 1481 pixels from the edge of the second display panel 30. Then, the transparence increases to the same level of P1 at a fourth position P4, at 1639 pixels from the edge of the second display panel 30.

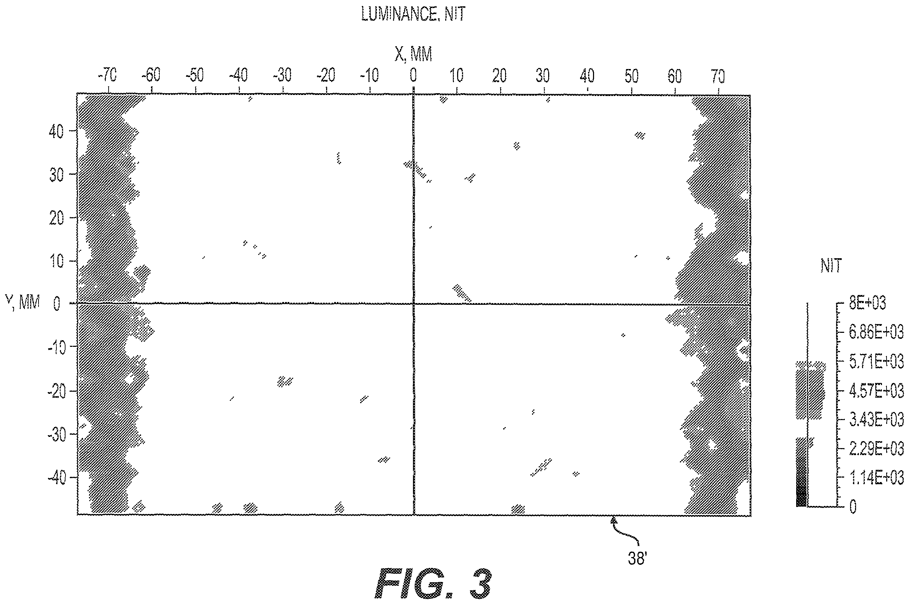

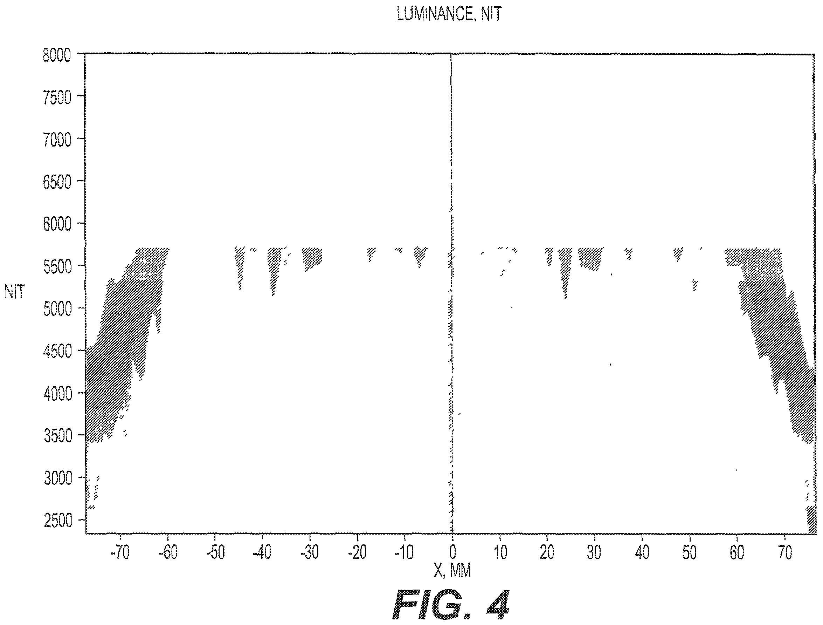

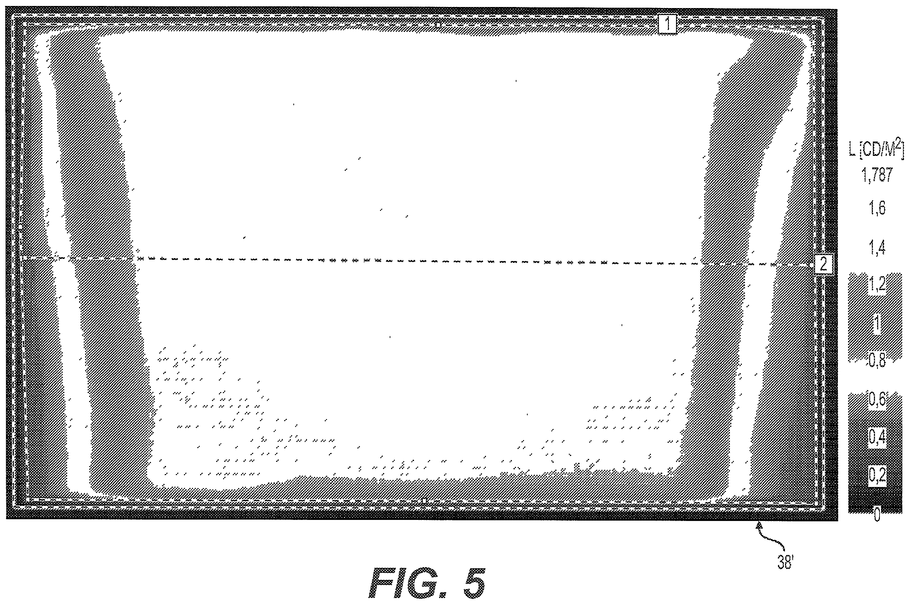

As best shown in FIGS. 3-5, the light guide 38' can also have an internal texture density distribution arranged to transmit light from the backlight module 44 through the first display panel 22 and the second display panel 30 within the first display periphery with a first transmitted luminance and through the second display panel 30 beyond the first display periphery 24 with a second transmitted luminance different than the first transmitted luminance. The internal texture distribution of the light guide 38' is exhibited by the distribution of the luminance of the light guide 38' illustrated in FIGS. 3-5. Thus, the light guide 38' can also help to eliminate a windowing effect due to differing light transmission through the second display panel 30 as compared to light transmission through both the first display panel 22 and the second display panel 30. Such a light guide 38' can be used in conjunction with the plurality of light emitting diodes 46, 48 divided into the first ranking group 50 including the plurality of first light emitting diodes 46 each having the first luminance and the second ranking group 52 including the plurality of second light emitting diodes 48 each having the second luminance different than the first luminance, as described above. However, it should be appreciated that the light guide 38' with the internal texture density distribution may also be used without the plurality of light emitting diodes 46, 48 divided into the first ranking group 50 and the second ranking group 52.

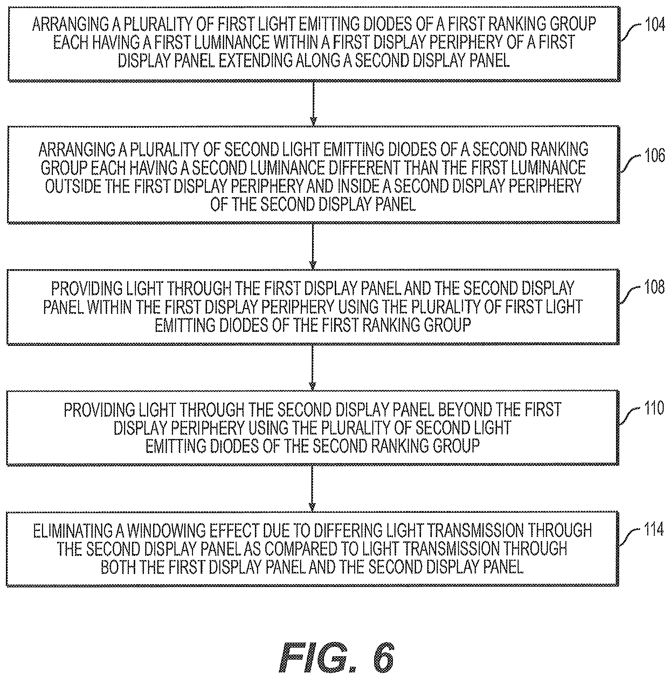

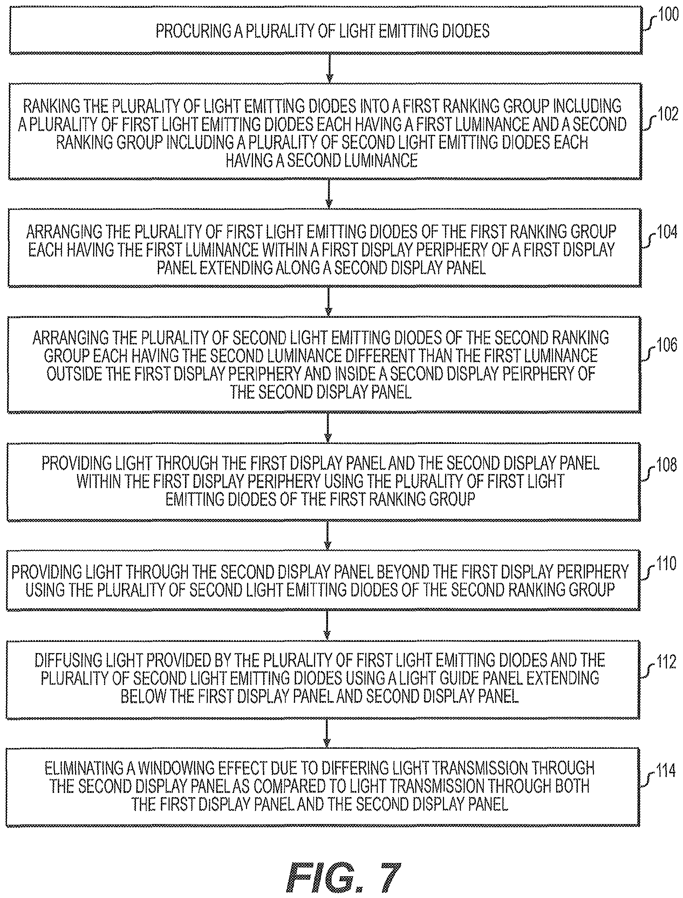

As best shown in FIGS. 6 and 7, a method of backlighting a display assembly 20 is also provided. The method begins with the step of 100 procuring a plurality of light emitting diodes 46, 48. The method continues with the step of 102 ranking the plurality of light emitting diodes 46, 48 into a first ranking group 50 including a plurality of first light emitting diodes 46 each having the first luminance and a second ranking group 52 including a plurality of second light emitting diodes 48 each having the second luminance.

The method also includes the step of 104 arranging a plurality of first light emitting diodes 46 of a first ranking group 50 each having the first luminance within a first display periphery 24 of a first display panel 22 extending along a second display panel 30. As discussed above, the first display panel 22 extends over top of a portion of the second display panel 30. The method continues with the step of 106 arranging a plurality of second light emitting diodes 48 of a second ranking group 52 each having a second luminance different than the first luminance outside the first display periphery 24 and inside a second display periphery 32 of the second display panel 30. Again, the first luminance of the plurality of first light emitting diodes 46 of the first ranking group 50 is less than the second luminance of the plurality of second light emitting diodes 48 of the second ranking group 52.

The next step of the method is 108 providing light through the first display panel 22 and the second display panel 30 within the first display periphery 24 using the plurality of first light emitting diodes 46 of the first ranking group 50. The method also includes the step of 110 providing light through the second display panel 30 beyond the first display periphery 24 using the plurality of second light emitting diodes 48 of the second ranking group 52. The method may also include the step of 112 diffusing light provided by the plurality of first light emitting diodes 46 and the plurality of second light emitting diodes 48 using a light guide panel 38, 38' extending below the first display panel 22 and second display panel 30, in the event that the display assembly 20 utilizes the light guide panel 38, 38'. As described above the diffusing can take place due to the internal texture density distribution of the light guide 38'. The method concludes with the step of 114 eliminating a windowing effect due to differing light transmission through the second display panel 30 as compared to light transmission through both the first display panel 22 and the second display panel 30.

Obviously, many modifications and variations of the claimed invention are possible in light of the above teachings and may be practiced otherwise than as specifically described while within the scope of the appended claims. These antecedent recitations should be interpreted to cover any combination in which the inventive novelty exercises its utility.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

Example embodiments are provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Spatially relative terms, such as "inner," "outer," "beneath," "below," "lower," "above," "upper," and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated degrees or at other orientations) and the spatially relative descriptions used herein interpreted accordingly.

## Claims

1. A display assembly comprising:
a first display panel extending along a plane to a first display periphery to display a first display content;
a second display panel extending in parallel along the plane to a second display periphery to display a second display content;
a light guide panel extending in parallel along the plane and below the first display panel and second display panel to diffuse light provided therethrough;
a backlight module extending along the light guide panel and including at least one light source to provide light through the light guide panel and the first display panel and the second display panel; and
the at least one light source including a plurality of light emitting diodes divided into a first ranking group including a plurality of first light emitting diodes each having a first luminance and arranged relative to the light guide panel to provide light through the first display panel and the second display panel within the first display periphery and a second ranking group including a plurality of second light emitting diodes each having a second luminance different than the first luminance and arranged relative to the light guide panel to provide light through the second display panel beyond the first display periphery to eliminate a windowing effect due to differing light transmission through the second display panel as compared to light transmission through both the first display panel and the second display panel.

2. The display assembly as set forth in claim 1, wherein the first display panel has a first display top surface and a first display bottom surface opposite the first display top surface and the second display panel has a second display top surface facing the first display bottom surface and a second display bottom surface opposite the second display top surface.

3. The display assembly as set forth in claim 2, wherein the light guide panel has a light guide top surface facing the second display bottom surface and a light guide bottom surface opposite the light guide top surface, and/or wherein the backlight module extends along and adjacent to the light guide bottom surface of the light guide panel.

4. The display assembly as set forth in claim 3, wherein the first display panel has a first display length and a first display width and the second display panel has a second display length greater than the first display length and a second display width equal to the first display width and the first display panel is centered along the second display length to define an overlap display area, and/or wherein the light guide panel has a light guide length equal to the second display length and a light guide width equal to the second display width.

5. The display assembly as set forth in claim 4, wherein the plurality of light emitting diodes are arranged rectilinearly adjacent to one another along the second display length, and/or wherein the plurality of first light emitting diodes of the first ranking group are disposed along the first display length inside the overlap display area and the plurality of second light emitting diodes of the second ranking group include a pair of outer subgroups the plurality of second light emitting diodes disposed along the second display length on either side of the plurality of first light emitting diodes of the first ranking group and each outer subgroup is disposed outside the overlap display area.

6. The display assembly as set forth in claim 5, wherein the luminance of the plurality of first light emitting diodes of the first ranking group is less than the luminance of the plurality of second light emitting diodes of the second ranking group.

7. The display assembly as set forth in claim 5 or 6, wherein the plurality of first light emitting diodes of the first ranking group includes twenty light emitting diodes and the plurality of second light emitting diodes of the second ranking group includes six light emitting diodes in each of the outer subgroups.

8. The display assembly as set forth in any of claims 1-7, wherein the backlight module includes a backlight mounting panel for supporting and spacing the plurality of light emitting diodes.

9. A method of backlighting a display assembly comprising the steps of:
arranging a plurality of first light emitting diodes of a first ranking group each having a first luminance within a first display periphery of a first display panel extending along a second display panel;
arranging a plurality of second light emitting diodes of a second ranking group each having a second luminance different than the first luminance outside the first display periphery and inside a second display periphery of the second display panel;
providing light through the first display panel and the second display panel within the first display periphery using the plurality of first light emitting diodes of the first ranking group;
providing light through the second display panel beyond the first display periphery using the plurality of second light emitting diodes of the second ranking group; and
eliminating a windowing effect due to differing light transmission through the second display panel as compared to light transmission through both the first display panel and the second display panel.

10. The method as set forth in claim 9, further including the steps of:
procuring a plurality of light emitting diodes; and
ranking the plurality of light emitting diodes into the first ranking group including the plurality of first light emitting diodes each having the first luminance and the second ranking group including the plurality of second light emitting diodes each having the second luminance, and/or wherein the first display panel extends over top of a portion of the second display panel and wherein the first luminance of the plurality of first light emitting diodes of the first ranking group is less than the second luminance of the plurality of second light emitting diodes of the second ranking group.

11. The method as set forth in claim 10, further including the step of diffusing light provided by the plurality of first light emitting diodes and the plurality of second light emitting diodes using a light guide panel extending below the first display panel and second display panel.

12. A display assembly comprising:
a first display panel extending along a plane to a first display periphery to display a first display content;
a second display panel extending in parallel along the plane to a second display periphery to display a second display content;
a backlight module extending in parallel along the plane and including at least one light source to provide light through the first display panel and the second display panel; and
a light guide panel extending in parallel along the plane and below the first display panel and second display panel and above the backlight module to diffuse light provided therethrough, wherein the light guide has an internal texture density distribution arranged to transmit light from the backlight module through the first display panel and the second display panel within the first display periphery with a first transmitted luminance and through the second display panel beyond the first display periphery with a second transmitted luminance different than the first transmitted luminance to eliminate a windowing effect due to differing light transmission through the second display panel as compared to light transmission through both the first display panel and the second display panel.

13. The display assembly as set forth in claim 12, wherein the at least one light source includes a plurality of light emitting diodes divided into a first ranking group including a plurality of first light emitting diodes each having a first luminance and arranged relative to the light guide panel to provide light through the first display panel and the second display panel within the first display periphery and a second ranking group including a plurality of second light emitting diodes each having a second luminance different than the first luminance and arranged relative to the light guide panel to provide light through the second display panel beyond the first display periphery.

14. The display assembly as set forth in claim 12 or 13, wherein the first display panel has a first display top surface and a first display bottom surface opposite the first display top surface and the second display panel has a second display top surface facing the first display bottom surface and a second display bottom surface opposite the second display top surface, and/or wherein the light guide panel has a light guide top surface facing the second display bottom surface and a light guide bottom surface opposite the light guide top surface.

15. The display assembly as set forth in any of claims 12-14, wherein the backlight module extends along and adjacent to the light guide bottom surface of the light guide panel.
